# EUROPEAN PATENT APPLICATION

(11) **EP 2 481 371 A1**
(43) Date of publication of application: **01.08.2012**
(21) Application number: 10818169.4
(22) Date of filing: 20.09.2010
(51) Int. Cl.: A61C 8/00

(54) **BAR ARTICULATED IN THREE PLANES FOR USE IN DENTAL IMPLANTS**

(30) Priority: 23.09.2009 BR PI0903606
(71) Applicant: Iglesias, Rinês De Freitas, Ribeirão Preto - SP Cep: 14024-180 (BR)
(72) Inventor: Iglesias, Rinês De Freitas, Ribeirão Preto - SP Cep: 14024-180 (BR)
(74) Representative: Torner Lasalle, Elisabet
(86) International application number: PCT/BR2010/000303
(87) International publication number: WO 2011/035398

(57) **Abstract**

The bar articulated in three plans for use in dental implants is a mobile structure consisting of a bar (1) with three dimensional movement (X, Y, Z), that is, on the three geometrical plans, made viable by the retractile and articulated (α) arms (2 and 3) in relation to rings (4 and 5) anchoring studs (6), in which such arms (2 and 3) and rings (4 and 5) have the endings with concave (7) and/or spherical (8) fittings, configuring a product that fits to almost all the implant cases, irrespectively of the quantity, angling and distance among them, as well as the height of the interocclusion. In a constructive variation, the pleaded bar has the arms (2 and 3) deriving from the fittings (7 or 8) on the stud itself (6).

## Description

### Technical field

This request of a patent of invention is about an inedited bar articulated in three plans for use in dental implants, particularly of an articulated bar with means that allow its articulation in the three geometrical plans, designed to the execution of a prosthesis over dental implant, that after a mechanical or chemical fastening becomes hard, fitting most of the cases of biomechanics of prosthesis over implant, irrespectively of the number of implants, angling, distance among them and height of the interocclusion.

### Background of the invention

Technically, the implant dentistry is a specialty of odontology referring to dental implants, and this technique has been suffering an incredible evolution over the years, directly related to the first researches about bony integration. The technique is designated for the treatment of patients who present total or partial loss of the dental elements.

Currently, the professionals devoted to such area have the conditions to provide a stable functional and aesthetic rehabilitation for the cases where patients, who initially didn't have any hope to have a fixed dentition, could keep it in their mouths in a reliable and comfortable manner.

Basically, the dental implant is constituted by a cylinder in a biocompatible material, placed on the upper jaw or in the mandible of the patient, in which, after some months, after the bony integration, the new teeth will be fixed. In a summarized form, the implant acts as a substitute of the root of the tooth originally lost.

Generally, the implants are accomplished in two steps, first is the surgical phase, when the titanium implant is installed in the bone of the patient. In the second step, after the bony integration, a microsurgery is accomplished to expose the upper end of the implant to install the prosthetic pillar, starting the laboratorial phase or prosthetic phase over the implant.

At the current state of the art, which is more conservative, the prosthetic phase is disposed in a simple moulding, more specifically a formwork with a moulding over the implant pins or extenders, proceeding to the bite record. This material goes to the prosthetist and returns over the form of a metallic structure, which will serve as a base and/or longitudinal Anchorage of the prosthesis, a structure with bipartite format, centrally united by a resin, aiming to offer more easiness so that the professional can make the correct adjustments of such structure in relation to the implant pins. Once it is adjusted, the metallic structure referred returns again to the prosthetist, who concludes the prosthesis to be used over the implant. As you may notice by the description, this procedure, which is more conventional, is a little laborious due to the moves back and forth to the prosthetist, besides requiring several adjustments for the obtainment of a satisfactory final result. On the other hand, it is common to have moulding errors, technical errors in prosthesis, distortions, misadaptations, deformation of the weld, etc.

It is part of the state of the art to have tools that enable the surgery directed to the implant, and for that it is necessary a lower prosthetic titanium bar, in which the drillings are accordant to the drillings of an implant assemble, in a way to result in a protocol of the mandible. This way of making implants speeds the several moves back and forth of the metallic structure to the prosthesis professional, but it has some operational inconveniences, such as, for example, the difficulty in the first bite record. Another negative aspect is that, despite being a guided system, it may occur some interference when putting the prefabricated bar over the implant pins.

PI 0403475-9 is a request that makes viable what was said above and what was given an original constructive disposition, aiming to improve its utilization and performance concerning to the other models usually found on the market, as it is constituted of a set of tools and connections for the use of implants, containing a titanium bar totally ready for being directly screwed and a bar with rings for cementation, coloured replaceable guides for milling cutters according to their diameters, accessories and milling cutters with regular diameter, special with demarcation of height (considering and discounting the thickness of the metallic surgical bar), internal hexagonal connections and external hexagonal connections.

### Disclosure of the invention

Aware of the state of the art, its gaps and limitations, the inventor, a person who is active on this segment, after studies and researches, has created the bar articulated in three plans for use in dental implants in question, which confers a mobile structure or a biomechanical articulated bar in prosthesis over implant with a grade of freedom of three dimensional movement that, after the fastening, whether mechanical or chemical, becomes rigid in the stud, being easily adapted to most of the cases, irrespectively of the number of implants, angling, distance among them and height of the introduction. Therefore, the surgical structure which serves as a support for the prosthesis is formatted in a definite manner within the clinic, from where it goes to the prosthetic step. In a constructive variation, the articulated bar may break or be incorporated to the stud, and there is no need for the securing rings.

Variations and displacements are common during the procedure of placement of the implant, whether by an undue movement of the patient, or by an inaccuracy in any step of the execution by the professional.

Basically, the product in question is formed by retractile arms with concave or spherical ends adaptable to the ends compatible to the tips of the rings anchored on the studs, copying thus the movement of a patella. As mentioned before, in a constructive variation, the retractile arms may derive from the stud. In this case, the rings will not be necessary.

The bar here pleaded presents as the most preponderant advantages:
● More practicality in the procedure of implant within the clinic or during the prosthetic step;
● Lower number of components, which facilitates handling inside the oral cavity;
● Less time for the surgery and/or the procedure;
● More accuracy and speed in the prosthesis adjustments;
● Best adaptation;
● Lower cost;
● Facility on the feasibility of the procedure, not depending on the manual ability of the professional;
● Liable of utilization in most of dental cases.

### Brief description of the drawings

The invention will be better explained through the drawings related below in an illustrative and non-restrictive form:

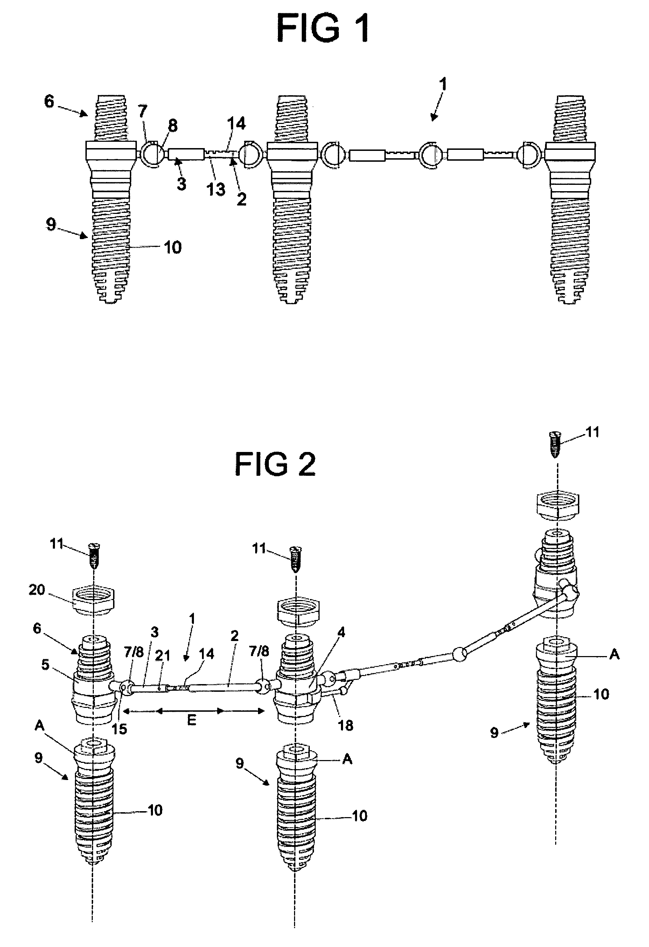

Figure 1: Elevation view of the bar articulated in three plans mounted in the dental implants;
Figure 2: Perspective view from the bar articulated in three plans for the use in dental implants, mounted in the stud exploded in relation to the implant;

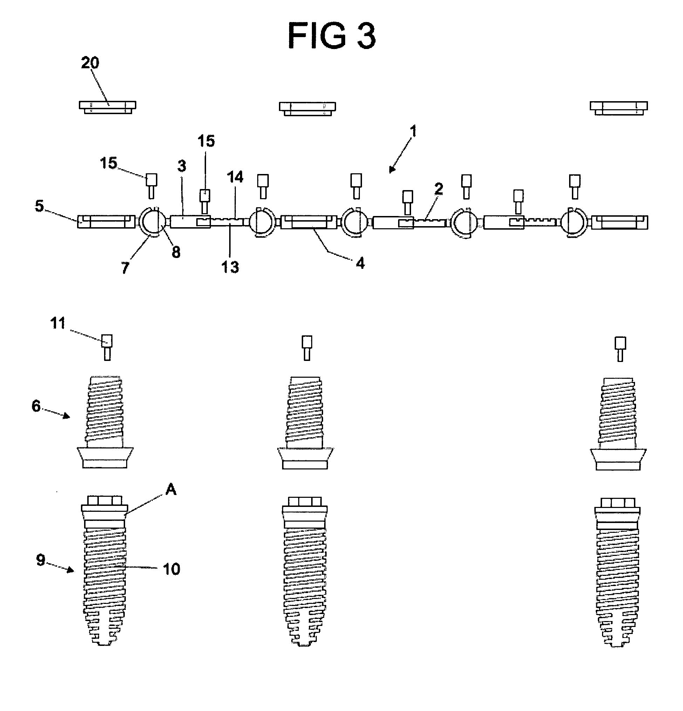

Figure 3: Elevation view of the bar articulated in three plans for use in dental implants, exploded in relation to the implant, stud, nut, washer and screws;

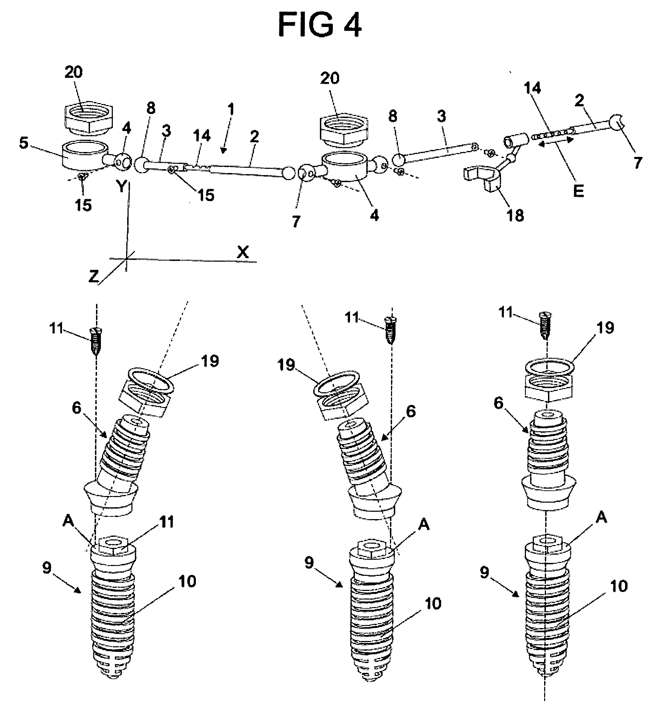

Figure 4: Visualized in perspective of the articulate bar in three plans for the use in dental implants, exploded in relation to the implant, stud, nut, washer and screws, with the detail of the fastening of the ring and an end knee brace;

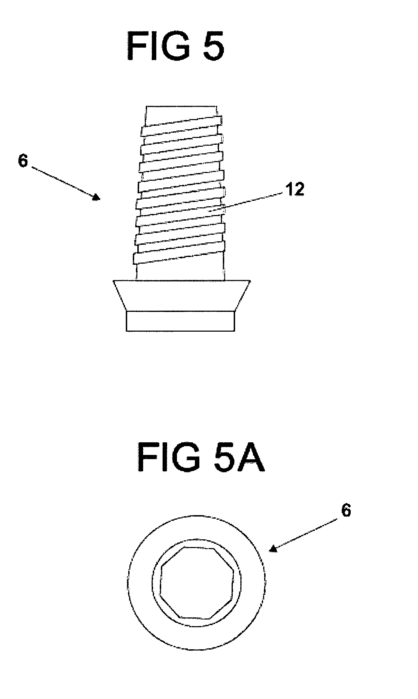

Figure 5: Elevation view of the stud;
Figure 5A: Upper detail view of the stud;

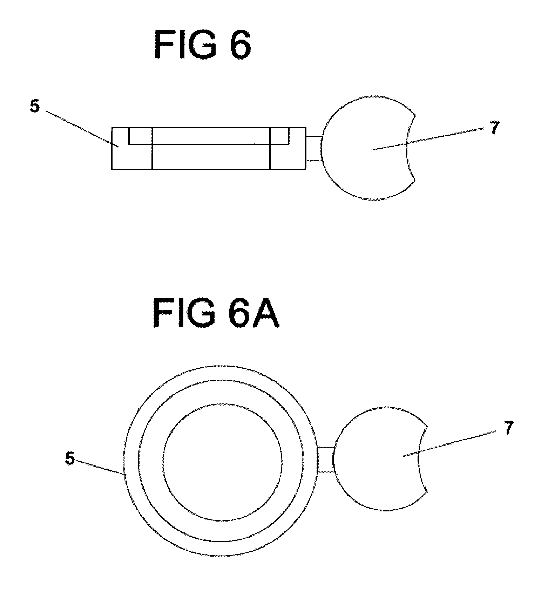

Figure 6: Elevation view of the end ring in upper view;
Figure 6A: Upper detail view of the end ring;

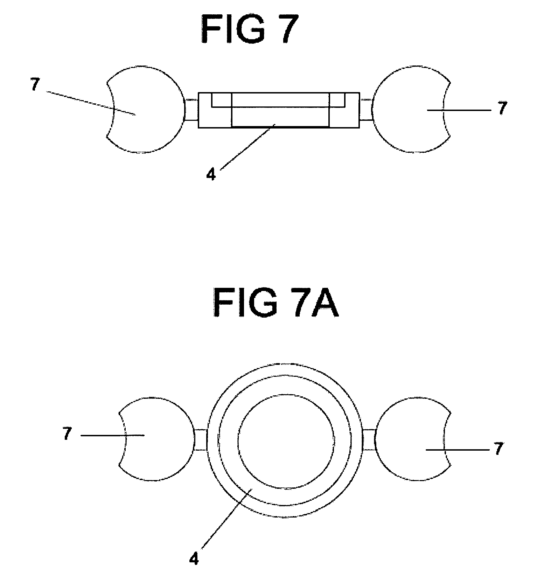

Figure 7: Elevation view of the intermediate ring;
Figure 7A; Upper detail view of the intermediate ring;

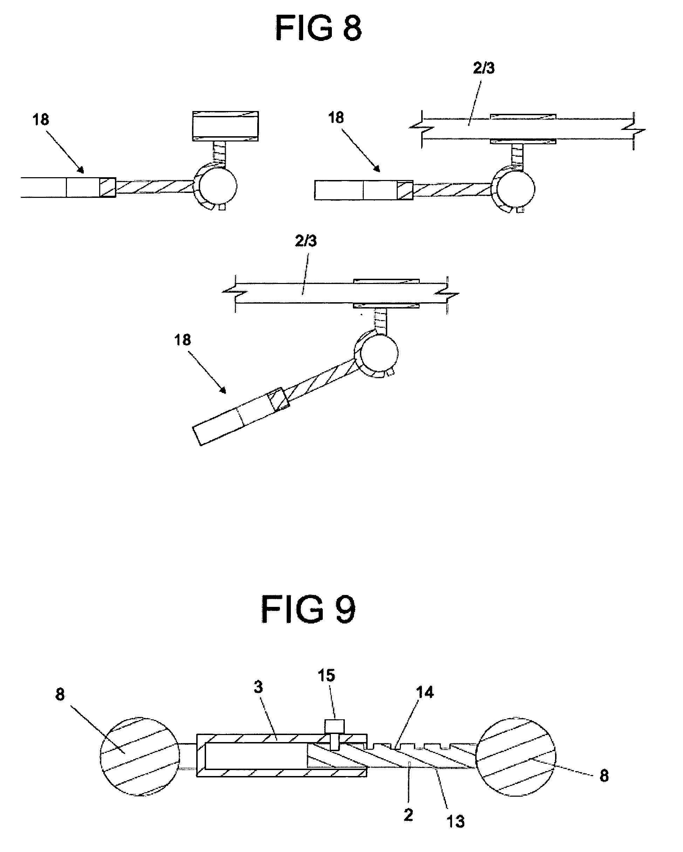

Figure 8: Cut view in the elevation of the retractile arm, with a detail showing movement;
Figure 9: Cut view showing the adjustment and the fastening among the arms with spherical ends;

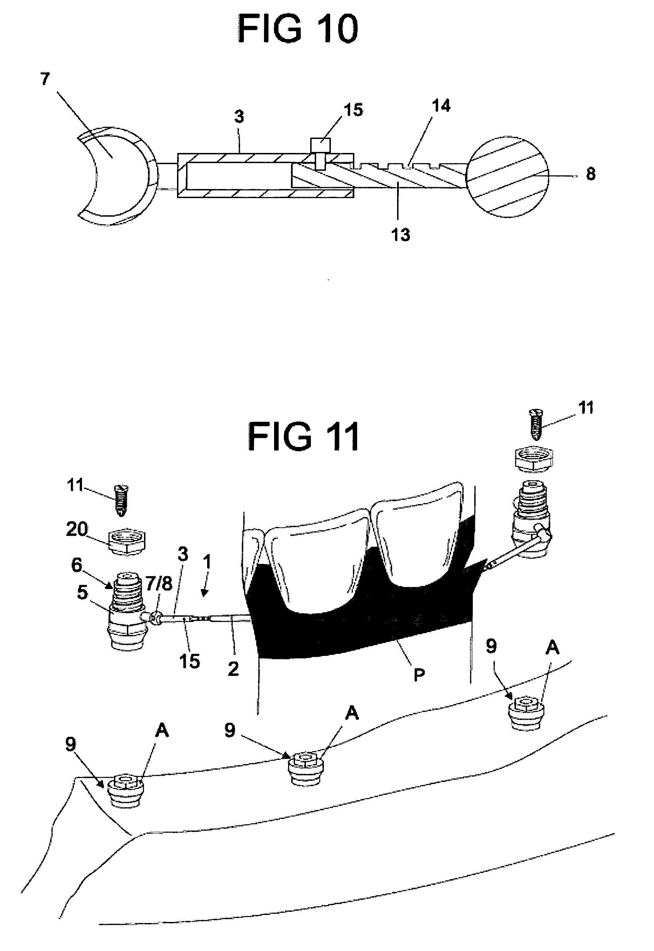

Figure 10: Cut view of the sphere of the articulated bar in another constructive disposition with differentiated ends;
Figure 11: Schematic perspective view, showing the application of the prosthesis made with the articulated bar;

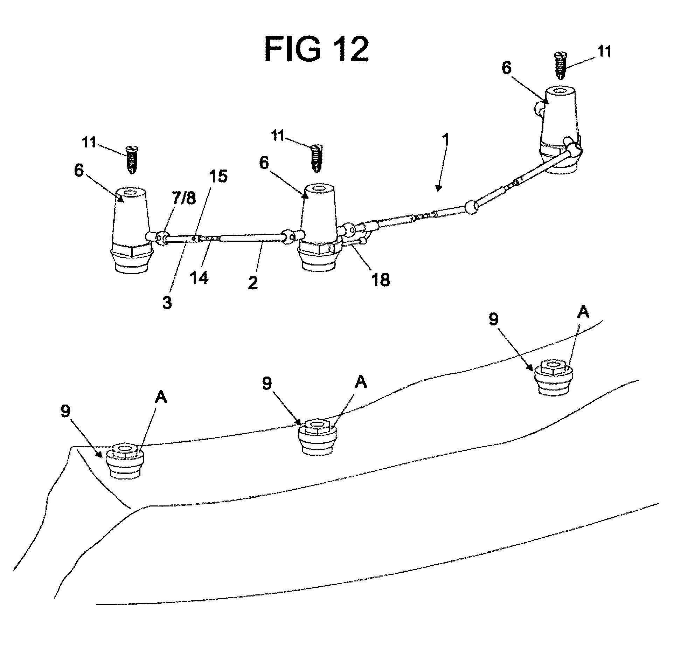

Figure 12: Perspective view of the bar articulated in three plans for use in dental implants, in a constructive variation deriving from the stud;

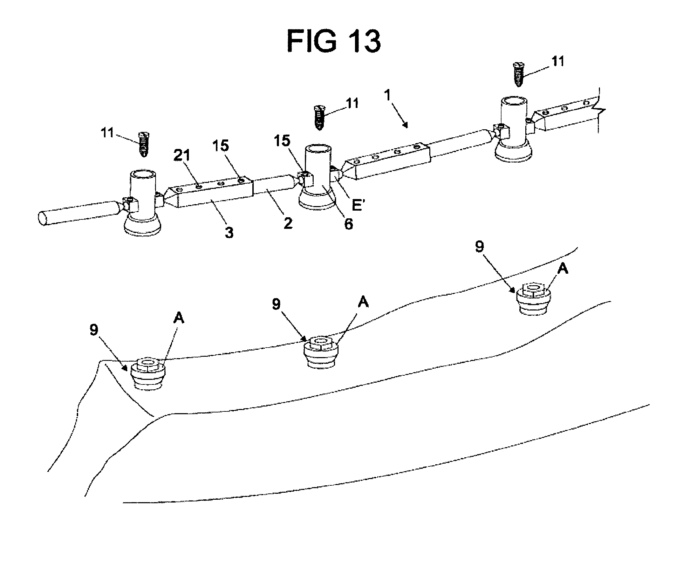

Figure 13: Perspective view of the bar articulated in three plans for use in dental implants, in a second constructive variation deriving directly from the stud with an encapsulated spherical fitting and an adjustment on the external arm;

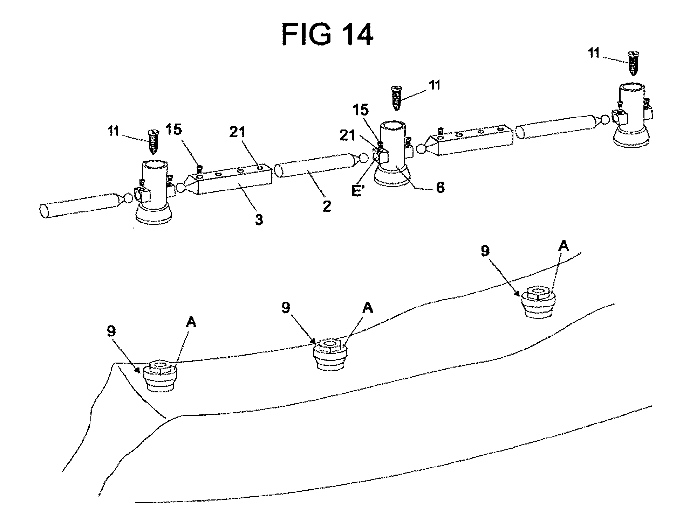

Figure 14: Exploded view of the bar articulated in three plans for use in dental implants, in a second constructive variation deriving directly from the stud with an encapsulated spherical fitting and an adjustment on the external arm;

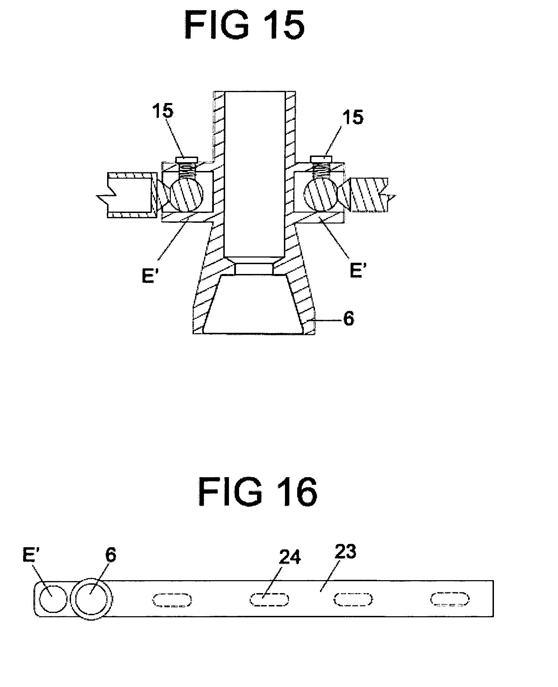

Figure 15: Cut view of the bar articulated in three plans for use in dental implants, in a second constructive variation deriving directly from the stud with an encapsulated spherical fitting and an adjustment on the external arm;
Figure 16: Upper view of the stud with a bracket for support of the prosthesis (cant lever).

### Detailed description of an exemplary embodiment

Referring to the Figures, a bar articulated in three plans for use in dental implants according to an exemplary embodiment of the present invention is shown, which comprises a mobile structure consisting in a bar (1) with freedom of three dimensional movement (X, Y, Z), that is, on the three geometrical plans, made viable by the retractile and articulated (α) arms (2 and 3) in relation to the anchoring rings (4 and 5) to the studs (6), in which such arms (2 and 3) and rings (4 and 5) have endings with concave (7) and/or spherical (8) fittings, configuring a product that fits to almost all the implant cases, irrespectively of the quantity, angling and distance among them, as well as the height of the interocclusion. In a constructive variation, the pleaded bar has the arms (2 and 3) deriving from the fittings (7 or 8) on the stud itself (6).

The implant (9) consists of a titanium cylindrical part, with a flange (10) to be inserted in the mandible bone and/or in the jaw, which serves as an anchorage to receive the prosthesis (P). After the incorporation of such implant (9) to the patient's bone, the dental surgeon inserts a stud (6) compatible with the upper ending of the implant (9), preferably fixed by a screw (11). Such stud (6) is equally endowed with an upper flange (12) with an axis which is concentric to the anchorage rings (4 and 5) of the structural part of the prosthesis, in this case the articulated bar (1), or else it may have a plain finishing for chemical stickering.

More particularly, the articulated bar (1) is formed by a set of retractile arms (2 and 3), where the arm (2) has an extension (13) which fits in a sliding manner in the complementary arm (3), enabling the distal opening and closing. The extension (13) formats a creased finishing (14) appropriate to receive a screw (15) and a resulting locking on the desired position. The set of arms (2 and 3) will always present the endings with a concave fitting (7) and/or another spherical fitting (8). This is necessary, so that the referred arms (2 and 3) join themselves in an articulated (α) manner to the rings (4 and 5) anchoring the studs (6), which, such as the arms (2 and 3) present a concave fitting (7) and/or a spherical fitting (8). On the other hand, the bar (1) presents intermediate rings (4) which are connected to two arms (2 or 3), and by the structure of the spherical endings (8), the one with concave channels finishing (16) or the one with irregular channels (17) it is possible to make it round and/or articulate among the arms (2 and 3) and rings (4 and 5), which will naturally fit to the implants (9) in any positioning condition. We add to the perfect adjustment of the bar (1) to the implants (9), the possibility to increase or reduce the spacing (E) of the arms (2 and 3). This way, the bar (1) on the screen presents the freedom of a three dimensional movement, that is, on the three geometrical plans (X, Y, Z). In turn, the ring (4 or 5) may receive a knee brace (18) which gives more support to the initial portion of the bar (1). Finally, the articulated bar (1) is settled to the upper tab (A) of the stud (6), which may be added by washers (19) with vertical adjustment, and after the due levelling, the whole set is fixed by an upper nut (20).

In a constructive variation, the bar (1) has the arms (2 and 3) directly deriving from the studs (6), and there is no need to use rings (4 and 5).

In a second constructive variation, the bar has the arms (2 and 3) inserted in the encapsulated fitting (E') directly on the stud (6), and the external arm (3) with holes (21) to receive the fixation screw (15) for fixing the extension (13) of the arm (2), thus enabling the distal adjustment. As the external arm (3), the encapsulated fitting (E') presents a hole (22) to receive the fixation screw (15).

Finally, the stud (6) may present a support (23) with oblongs (24) to be fulfilled with resin, aiming to anchor the prosthesis, a support that is also named as cant lever.

Thus, the structure, formatted within the clinic, constituted by the articulated bar (1), the stud (6), washers (19), nuts (20) and screws (11 and 15), or only the stud (6) with the due fittings (7 and 8) or support (23), goes to the prosthetic step, ready and properly adjusted.

## Claims

1. bar articulated in three planes for use in dental implants", wherein its is formed by a set of retractile arms (2 and 3), in which an arm (2) has an extension (13) that fits in a sliding manner to the complementary arm (3); the extension (13) formats a creased finishing (14) appropriate to receive a screw (15); the set of arms (2 and 3) will always present the endings with a concave fitting (7) and/ or another spherical fitting (8), such as Anchorage rings (4 e 5) of the studs (6); the bar (1) presents intermediate rings (4) which connect themselves in two arms (2 or 3), and, by the structure of the spherical endings (8), the one with concave channels finishing (16) or the one with irregular channels (17) it is possible to make it round and/or articulate among the arms (2 and 3) and rings (4 and 5). We add to the perfect adjustment of the bar (1) to the implants (9), the possibility to increase or reduce the spacing (E) of the arms (2 and 3).

2. bar articulated in three planes for use in dental implants", according to claim 1, wherein has an extreme (5) or intermediate (4) ring which may receive the knee brace (18).

3. bar articulated in three planes for use in dental implants", according to claim 1, wherein has the articulated bar (1) which is fixed to the upper tab (A) of the stud (6), which may be added by washers (19) with vertical adjustment, and after the proper leveling, the whole set is fixed by an upper nut (20).

4. bar articulated in three planes for use in dental implants", according to claim 1, wherein has a structure, which is constituted by the articulated bar (1), the stud (6), washers 19), nuts (20) and screws (11 and 15).

5. bar articulated in three planes for use in dental implants", according to claim 1, wherein, in a constructive variation, the bar (1) has arms (2 and 3) directly deriving from the studs (6).

6. bar articulated in three planes for use in dental implants", according to claim 5, wherein the encapsulated fitting (E') is directly in the stud (6) with the external arm (3) with holes (21) to receive the fixation screw (15) of the extension (13); the encapsulated fitting (E') presents a hole (22) to receive the fixation screw (15).

7. bar articulated in three planes for use in dental implants", according to claim 5, wherein the stud has a support (23) with oblongs (24).
